(19) Europäisches Patentamt
European Patent Office
Office européen des brevets

(11) EP 2 919 046 A1

(12) EUROPEAN PATENT APPLICATION

(43) Date of publication:
16.09.2015 Bulletin 2015/38

(51) Int Cl.:
$G02B\ 5/18^{(2006.01)}$

(21) Application number: 15000640.1

(22) Date of filing: 05.03.2015

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA

(30) Priority: 10.03.2014 JP 2014045909

(71) Applicant: Canon Kabushiki Kaisha
Tokyo (JP)

(72) Inventor: Kitamura, Tsuyoshi
Tokyo (JP)

(74) Representative: WESER & Kollegen
Radeckestraße 43
81245 München (DE)

(54) **Diffraction grating of the reflective-type**

(57) Reflection-type diffraction grating (1), the cross-section of which having an asymmetrical triangular-shape, the diffraction grating comprising a first layer (3) formed on the cross-section having the asymmetrical triangular shape, of which a material is a metal (Al) for reflecting light; and a second layer (4) formed on said first layer in a surface of a long side of the triangular-shape, of which a material is a dielectric (e.g. $MgF_2$), wherein the thickness of the second layer is, in nanometers, lower than or equal to $15.38 \times (n - 1)^{-0.65}$ where n denotes the refractive index of the dielectric.

FIG. 4

REFRACTIVE INDEX OF DIELECTRIC LAYER ON COUNTER SURFACE

## Description

BACKGROUND OF THE INVENTION

Field of the Invention

The present invention relates to a diffraction grating, a laser apparatus, and a manufacturing method for the diffraction grating.

Description of the Related Art

Conventionally, there is a diffraction grating used in an ArF or Krf excimer laser apparatus as a reflection-type diffraction grating, which is used, for example, for dispersing a wavelength of far ultraviolet rays. Such a diffraction grating is used as a band-narrowing element and acts as a kind of a resonator by combining an output mirror in a discharge chamber. Here, the high proportion of light quantity that returns at a predetermined order upon the reflection, that is, high diffraction efficiency, is important for utilizing incident light without being wasted it as far as possible, and for obtaining a preferable operation of the laser apparatus. The reflection-type diffraction grating is typically an asymmetrical triangle-shaped grating, includes a reflective layer made of a metal and a dielectric layer formed on the reflective layer for protecting the reflective layer from influences such as oxidation. However, the dielectric layer is contributes significantly to the diffraction efficiency. Japanese Patent No. 4549019 discloses a diffraction grating having a dielectric layer including $Al_2O_3$, for enhancing the antioxidant effect more than a conventional one and for enhancing the diffraction efficiency by specifying a thickness of the dielectric layer. U.S. Patent Publication No. 2009/0027776 additionally discloses a method for enhancing the diffraction efficiency in which no dielectric layer or a dielectric layer thinner than a blaze surface is formed on a counter surface on which no light or small amount of light is incident, and which is generally adjacent to the blaze surface at the light incident side.

The condition of the dielectric layer on the counter surface is important when forming the dielectric layer to enhance the diffraction efficiency. Depending on the condition, absorption of light on the counter surface may occur and the diffraction efficiency may more significantly lower than the case where the reflective layer is disposed as an outermost layer. However, Japanese Patent No. 4549019 does not disclose the absorption of light on the counter surface. In contrast, U.S. Patent Publication No. 2009/0027776 discloses the absorption of light on the counter surface under the limited condition described above. However, in fact, the diffraction efficiency may be significantly lower than the case where the reflective layer is disposed as the outermost layer even when the dielectric layer thinner than the blaze surface is formed on the counter surface. For example, the diffraction efficiency lowers to 43.2% when forming an $MgF_2$ single layer film that serves as the dielectric layer on the reflective layer in spite of the diffraction efficiency being 62.6% when forming an aluminum film that serves as the reflective layer. Noted that, the thickness of the blaze surface is about 56 nm in this case, which is approximately optimum when considering the diffraction efficiency, and the thickness of the counter surface is 33 nm. Specifically, it does not mean that all the diffraction grating acquires high efficiency even when satisfying the condition disclosed in the specification of United States Patent Application No. 2009/0027776. In contrast, with reference to the condition in which no dielectric layer is formed on the counter surface, an extremely strict control of the film-forming conditions, such as an incident angle on the dielectric layer, is needed in the film-forming process, and manufacturing thereof is technically difficult and is achieved with difficulty.

SUMMARY OF THE INVENTION

The present invention provides, for example, a diffraction grating having high diffraction efficiency and is easily manufactured.

The present invention in its first aspect provides a diffraction grating as specified in claims 1 to 4. The present invention in its second aspect provides a laser apparatus as specified in claim 5. The present invention in its third aspect provides a manufacturing method for the diffraction grating as specified in claim 6.

Further features of the present invention will become apparent from the following description of embodiments with reference to the attached drawings. Each of the embodiments of the present invention described below can be implemented solely or as a combination of a plurality of the embodiments or features thereof where necessary or where the combination of elements or features from individual embodiments in a single embodiment is beneficial.

BRIEF DESCRIPTION OF THE DRAWINGS

FIG. 1A illustrates a configuration and a shape of a diffraction grating having a single-layered dielectric layer according to a first embodiment of the present invention.

FIG. 1B illustrates a configuration and a shape of a diffraction grating having a multilayered dielectric layer according to the first embodiment of the present invention.

FIG. 2 is a graph illustrating a calculated result for the efficiency in the first embodiment.

FIG. 3 is a graph in which the representation of the graph in FIG. 2 is changed.

FIG. 4 is a graph illustrating a thickness with respect to a refractive index of a dielectric layer on a counter surface.

FIG. 5 is a graph illustrating a calculated result for the efficiency in a second embodiment.

FIG. 6 is a graph illustrating a calculated result for the efficiency in a third embodiment.

FIG. 7 illustrates a configuration of a laser apparatus capable of applying a diffraction grating according to the present invention.

DESCRIPTION OF THE EMBODIMENTS

Hereinafter, preferred embodiments of the present invention will be described with reference to the drawings.

(First Embodiment)

First, a description will be given of a diffraction grating according to a first embodiment of the present invention. The diffraction grating according to the present embodiment is a reflection-type diffraction grating that has a reflective layer, and the cross section having an asymmetrical triangular shape that is continuously disposed. The diffraction grating is used, for example, for an ArF excimer laser apparatus (used for dispersing light upon generating ArF excimer laser light), and also acts as a kind of a resonator by combining an output mirror in a discharge chamber, in parallel with narrowing the band.

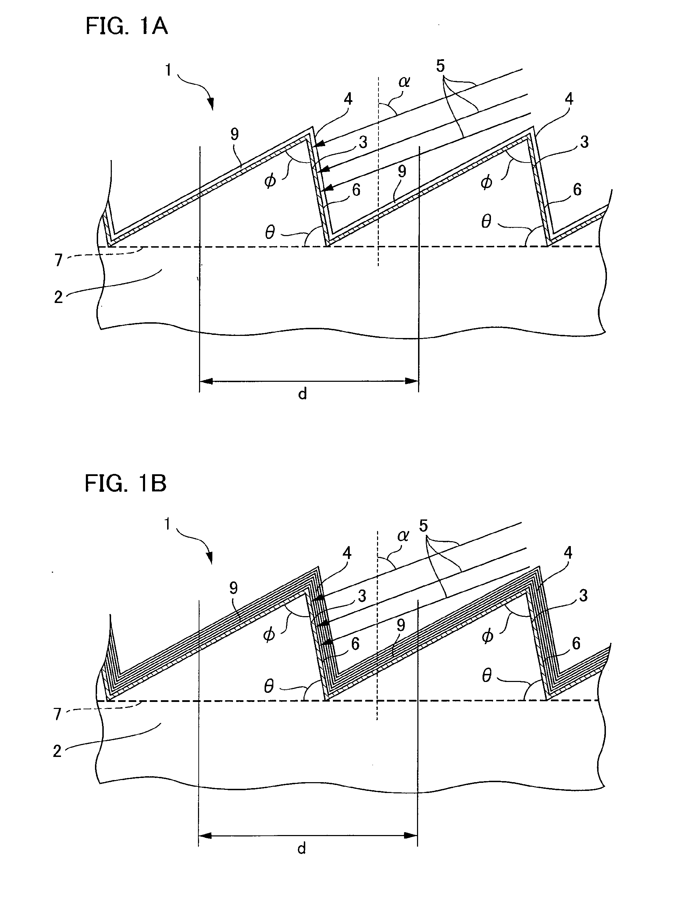

FIGs. 1A and 1B are schematic cross-sectional diagrams illustrating a configuration and a shape of a diffraction grating 1. The diffraction grating 1 has a resin layer 2, a metal layer (first layer) 3, and a dielectric layer (second layer) 4. The resin layer 2 is a main body of the diffraction grating 1 molded by a metal mold for manufacturing the diffraction grating, and its material is a resin, such as, an acryl, an epoxy or the like. The metal layer 3 is a reflective layer (reflective film) configured of a metal such as an aluminum, disposed on the resin layer 2 (on an asymmetrical triangular cross-sectional structure). The dielectric layer 4 is a protective layer (protective film) configured of a dielectric for protecting the metal layer 3 from oxidation or the like, disposed on the metal layer 3. $MgF_2$, $LaF_3$, or $AlF_3$ are preferable for the material of the dielectric, and the dielectric layer 4 specifically has a structure consisting of a single layer or plural layers thereof. Noted that FIG. 1A illustrates a case where the dielectric layer 4 is a single layer, and FIG. 1B illustrates a case where the dielectric layer 4 has six-layer structure as an example of plural layers. Additionally, with reference to an asymmetrical triangular shape formed of the surface of the metal layer 3, a blaze surface 6 corresponds to a short side of the surface and on which light rays 5 are incident, a blaze angle $\theta$ is between the blaze surface 6 and a grating plane 7 of the diffraction grating 1 (a base of the triangle shape), and a counter surface 9 corresponds to a long side of the surface. Additionally, "$\varphi$" is a vertex angle, and "d" is a repeated length (grating interval) of the grating shape. A high proportion of the light quantity that returns at a predetermined order upon the reflection, that is, a high diffraction efficiency, is important for efficiently utilizing the light rays 5, and the diffraction efficiency depends significantly on the blaze angle $\theta$ and the vertex angle $\varphi$, which are interior angles of the triangular shape. Typically, the vicinity of 90 degrees is selected as the vertex angle $\varphi$ and the vicinity of 80 degrees is selected as the blaze angle $\theta$ so as to directly face the incident light in the excimer laser element.

Next, a description will be given of a thickness condition of the dielectric layer 4 for enhancing the diffraction efficiency of the diffraction grating 1 (hereinafter referred to as "thickness condition with high efficiency"). Typically, a condition about how the dielectric layer 4 is formed (added) is significantly important for realizing a diffraction grating having high efficiency. This is because the diffraction efficiency may drastically be lowered due to the absorption of light occurring at the dielectric layer 4 on the counter surface 9 (on the surface) as described above. A fact also disclosed is that the diffraction efficiency may be lowered even when the thickness of the dielectric layer 4 on the counter surface 9 is thinner than that of the dielectric layer 4 on the blaze surface 6, as described in the description of the related art. In contrast, also with reference to a condition in which the dielectric layer 4 is not added to the counter surface 9, manufacturing thereof is also technically very difficult and such a diffraction grating is realized with difficulty due to a requirement of strict control of the film-forming conditions in the film-forming process, as described above.

Based on the matters described above, in the present embodiment, the thickness condition with high efficiency is set as below. The thickness condition with high efficiency is determined by calculating the diffraction efficiency (hereinafter, refer to as only "efficiency".) that is executed by an information processing unit (computer) by using a rigorous coupled-wave analysis (RCWA), which is a type of the electromagnetic field analysis methods. First, a description will be given of a value that is set in advance when calculating the efficiency. The diffraction grating 1 is used under a condition in which an emitted light is reflected in the same direction as the incident light, a so-called Littrow layout, in the ArF excimer laser apparatus. Additionally, an incident angle (incident angle of light rays $\alpha$) that is an angle at which the light rays 5 are incident to the diffraction grating 1 (angle to a normal of the grating plane 7), is equal to an emission angle, 79.60 degrees. A wavelength $\lambda$ of the light that is excited and discharged by argon-fluorine and irradiated to the diffraction grating 1 is 193.00 nm. The grating interval d is 10.7081 $\mu$m (93.3636 grating grooves per 1 mm), the order m is 109, and vertex angle $\varphi$ is 85.50 degrees. The material of the metal layer 3 is aluminum, and its film thickness is 220 nm. The refractive index of aluminum is 0.14 + 2.35i. Moreover, the dielectric layer 4 is a single film of which the material is $MgF_2$, and the refractive index of $MgF_2$ is 1.45 in the calculation below. Based on these setting values, the information processing unit executes calculating the efficiency by using each thickness (film thickness) of the $MgF_2$ layer on the blaze surface 6 and the $MgF_2$ layer on the counter surface 9, which serve as the dielectric layer 4, as parameters.

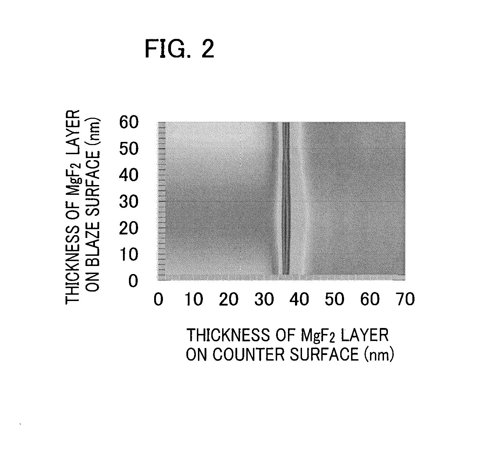

FIG. 2 is a graph illustrating a calculated result for the efficiency in the present embodiment. In FIG. 2, the horizontal axis denotes the thickness of the $MgF_2$ layer on the counter surface 9 and the vertical axis denotes the thickness of $MgF_2$ layer on the blaze surface 6. Note that in the calculation the thickness of the $MgF_2$ layer on the counter surface 9 is set in the range between 0 nm and 70 nm, and the thickness of the $MgF_2$ layer on the blaze surface 6 is set in the range between 0 nm and 60 nm. Additionally, an axis direction perpendicular to a plane (paper surface) consisting of the horizontal axis and the vertical axis is the efficiency, and it is expressed by using shades. Note that the efficiency on the axis is denoted as a proportion to a case where the efficiency is 1 when no $MgF_2$ layer is present on both of the blaze surface 6 and the counter surface 9, in other words, the metal layer 3 is disposed as the outermost layer. As seen from FIG. 2, a remarkable lowering of the efficiency occurs in some parts depending on the thickness of the dielectric layer 4 on the counter surface 9.

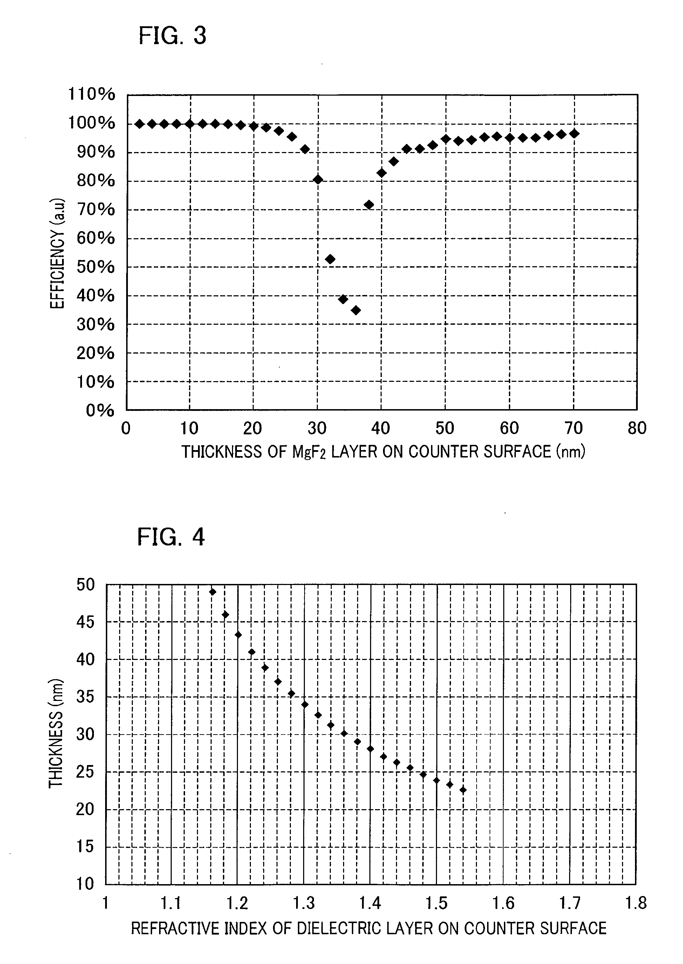

FIG. 3 is a graph in which the representation of the graph in FIG. 2 is changed so as to illustrate data when the efficiency is denoted by the horizontal axis and the thickness of the blaze surface 6 having optimal efficiency is 56.7 nm. When the thickness of the $MgF_2$ layer on the counter surface 9 is about 20 nm or below, the efficiency is maintained between 99.3% and 100.1%, which is almost same in comparison with the case in which the metal layer 3 is disposed as the outermost layer, even when the dielectric layer 4 is present. However, the efficiency suddenly begins to be lowered when the thickness further increases and reaches 25 nm or above. Subsequently, the efficiency becomes minimal when the thickness is 35 nm, and the efficiency suddenly increases when the thickness is more than 35 nm. When the thickness is about 50 nm or above, the enhancement of the efficiency is saturated and the efficiency becomes almost constant. The efficiency in this case is in the range between 95.1% and 97.0% in comparison with the case the metal layer 3 is disposed as the outermost layer.

Based on the change of the efficiency described above, the thickness condition of the dielectric layer 4 having high efficiency is that the thickness of the dielectric layer 4 (here, the $MgF_2$ layer) on the counter surface 9 is thinner than a given thickness (smaller than a given value). Additionally, while the efficiency drastically lowers when the thickness of the dielectric layer 4 on the counter surface 9 is thicker than the given thickness, the efficiency increases and is finally saturated when the thickness further increases. For example, a case is considered of forming the $MgF_2$ film such that the thickness of the $MgF_2$ layer on the blaze surface 6 is 56 nm and the thickness of the $MgF_2$ layer on the counter surface 9 is 20 nm, with respect to the diffraction grating having the efficiency of 61.9% when forming the metal layer 3 (when forming aluminum film). In this case, the efficiency after forming the $MgF_2$ film is consequently 61.7%, which is almost same value as the case where the metal layer 3 is disposed as the outermost layer. That is, the efficiency that is almost same as the case where the metal layer 3 is disposed as the outermost layer may be acquired by allowing the dielectric layer 4 on the counter surface 9 to have appropriate thickness.

Additionally, a high efficiency needs to be defined when regulating the thickness of the dielectric layer 4 on the counter surface 9 to achieve the high efficiency. In the present embodiment, "high efficiency" is defined as an efficiency that is always higher than the efficiency when the thickness of the dielectric layer 4 on the counter surface 9 is a given thickness or above. Specifically, a high efficiency is the efficiency of 97.0% or above with respect to the efficiency when the metal layer 3 is disposed as the outermost layer, and correspondingly, a thickness condition with high efficiency is a case where the thickness of the dielectric layer 4 on the counter surface 9 is between 0.1 nm and 25.8 nm. Note that for acquiring high efficiency, it is important to satisfy the thickness condition with high efficiency, and the thickness of the dielectric layer 4 on the counter surface 9 does not have to be thinner than that of the dielectric layer 4 on the blaze surface 6. Additionally, a configuration in which the dielectric layer 4 is not formed only on the counter surface 9 (that is, the thickness of the dielectric layer 4 is zero), which involves great difficulty in manufacture, is not needed.

Here, the thickness condition with high efficiency described above changes little due to the variation of the material of the metal surface of the metal layer 3 and the grating shape (triangular shape), and therefore it seems to be less dependent on them. In contrast, the thickness condition with high efficiency largely depends only on the refractive index of the material (dielectric) configuring the dielectric layer 4 on the counter surface 9. A maximum value "a" of the thickness of the dielectric layer 4 on the counter surface 9 that satisfies the thickness condition with high efficiency is calculated by changing the refractive index "n" of this dielectric as shown below.

FIG. 4 is a graph illustrating the thickness with respect to the refractive index of the dielectric configuring the dielectric layer 4 on the counter surface 9. This result can be approximated by using an exponential function, and the approximate formula is denoted by formula (1).
[Formula 1]

$$a = 15.38 \times (n-1)^{-0.65} \qquad (1)$$

That is, the diffraction grating 1 can realize a high efficiency if the maximum value "a" is in the range denoted by formula (2) as the condition formula below, with respect to the refractive index "n" of the dielectric.
[Formula 2]

$$0 < a \leq 15.38 \times (n-1)^{-0.65} \qquad (2)$$

Thus, the thickness of the dielectric layer 4 on the counter surface 9 may be designed so as to satisfy the condition with high efficiency as described above ($15.38 \times (n-1)^{-0.65}$ (nm) or below) (designing step), and the metal layer 3 may be formed on the resin layer 2 and the dielectric layer 4 may be formed on the metal layer 3 (forming step). Accordingly, the diffraction grating 1 can acquire a high efficiency by using a relatively easy manufacturing method.

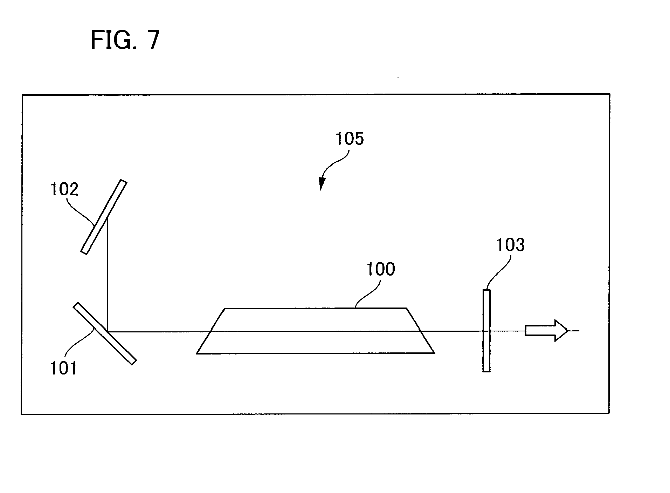

As described above, the diffraction grating having a high diffraction efficiency and that is easily manufactured, and a manufacturing method for the diffraction grating can be provided according to the present embodiment. Additionally, by using the diffraction grating 1 according to the present embodiment, the laser apparatus allows utilizing the incident light without being wasted it as far as possible and efficiently generating laser. FIG. 7 is a schematic diagram illustrating a configuration of an excimer laser apparatus serving as a laser apparatus capable of applying the diffraction grating according to the present invention. The laser apparatus 105 is provided with a laser tube 100, a mirror 101, a diffraction grating 102, and an output mirror 103. Firstly, laser light is generated in the interior of the laser tube 100. The generated laser light passes through one of windows formed in the laser tube 100, and is reflected on the mirror 101. The reflected light on the mirror 101 is incident to the diffraction grating 102. Here, the diffraction grating 1 of the above embodiment may be applied to the laser apparatus 105 as the diffraction grating 102. In this case, the diffraction grating 102 is a reflection-type diffraction grating. The diffraction grating 102 diffracts light having a specific wavelength, at a specific order to generate light returning to the mirror 101. Accordingly, only light having a specific narrow wavelength band is reflected on the diffraction grating 102, and the band of the laser light is narrowed. Subsequently, the light returning to the mirror 101 is reflected on the mirror 101 again and is directed to the laser tube 100. The light is further amplified in the laser tube 100, passes through the other window of the laser tube 100 to be incident to the output mirror 103. The output mirror 103 transmits a portion of light, and reflects the other portion. The reflected light from the output mirror 103 returns to the laser tube 100 to be further amplified and further band-narrowed. If the diffraction grating 1 having high diffraction efficiency in the above embodiment is used as the diffraction grating 102, light loss may be suppressed and band-narrowed laser light may be generated. The diffraction grating 1 in the above embodiment may be used in a spectrometer, a wavelength meter or the like in addition to the laser apparatus 105.

(Second embodiment)

Next, a description will be given of a diffraction grating according to a second embodiment. The diffraction grating in the case where the dielectric layer 4 is configured of the $MgF_2$ single layer is exemplified in the first embodiment. In contrast, as a case of configuring the dielectric layers 4 having plural layers including a plurality of dielectrics, the present embodiment exemplifies a case where a $LaF_3$ layer is further configured on the $MgF_2$ layer. Note that the same reference numerals are provided to each of the elements and the parts of the diffraction grating of the present embodiment corresponding as each of the elements and the parts of the diffraction grating 1 according to the first embodiment.

Here, serving as values previously set before calculating the efficiency in the present embodiment, the refractive index of the $LaF_3$ layer is 1.61, the thickness of the $MgF_2$ layer on the blaze surface 6 is 25 nm, and the thickness of the $LaF_3$ layer on the blaze surface 6 is 30 nm. Note that other calculation conditions are identical to those in the first embodiment. The thickness of the $MgF_2$ layer on the counter surface 9 and the thickness of the $LaF_3$ layer on the counter surface 9 are then changed as parameters to derive the thickness condition with high efficiency in a manner similar to the defined one in the first embodiment.

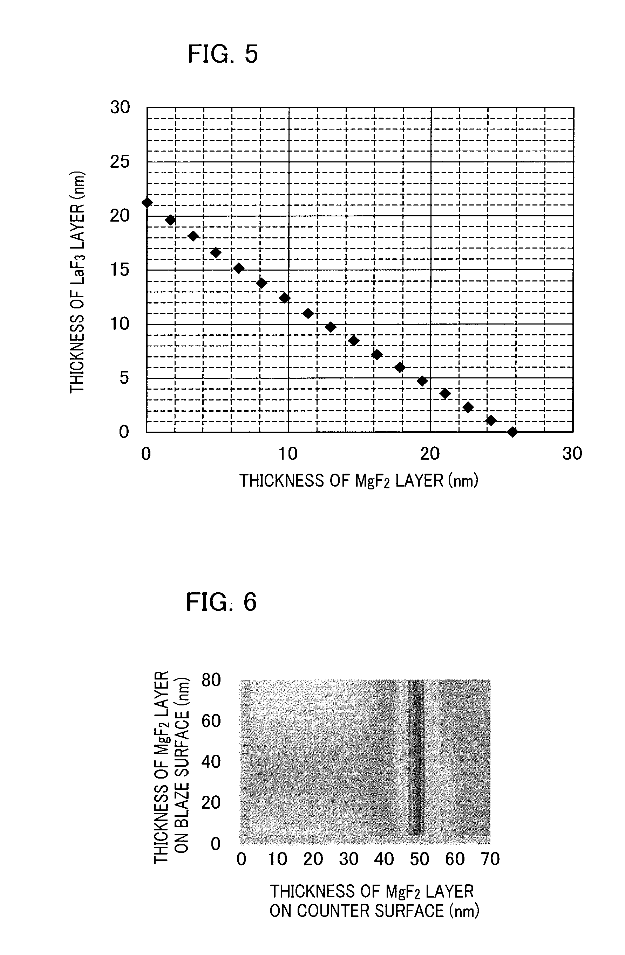

FIG. 5 is a graph illustrating a calculated result of the efficiency in the present embodiment. First, with reference to the thickness condition with high efficiency when a dielectric layer 4 of one material is not present, in other words, when the thickness of the dielectric layer 4 of one material is zero, the formula (2) is applied to the dielectric layer 4 of the other present material. Specifically, the thickness condition with high efficiency is to satisfy $0 < a \leq 25.8$ when only the $MgF_2$ layer is present as the dielectric layer 4 on the counter surface 9, or to satisfy $0 < a \leq 21.2$ when only the $LaF_3$ layer is present as the dielectric layer 4 on the counter surface 9. Additionally, when the layers including both materials as the dielectric layer 4 are present on the counter surface 9, the thickness condition with high efficiency linearly changes between a thickness of 25.8 nm when only the $MgF_2$ layer is present on the counter surface 9 and a thickness of 21.2 nm when only the $LaF_3$ layer is present on the counter surface 9. That is, the thickness condition with high efficiency is satisfied if the total thickness of the layers including both materials is smaller than the maximum value of the thickness with high efficiency (21.2 nm in the embodiment) in the case where only the material having a larger refractive index ($LaF_3$ in the embodiment) is present. Accordingly, the thickness condition with high efficiency with reference to the dielectric layer 4 including plural layers can be realized under a condition in which the total thickness of the plural layers satisfies formula (2), wherein the refractive index of the maximum one of either of the configured dielectrics is defined as "n" , in the present embodiment.

(Third embodiment)

Next, a description will be given of a diffraction grating according to a third embodiment of the present invention. In the first embodiment, a diffraction grating that is assumed to apply to the ArF excimer laser and in which the wavelength $\lambda$ of light is 193.00 nm is exemplified. In contrast, in the present embodiment, the diffraction grating that is assumed to apply to the KrF excimer laser and in which the wavelength $\lambda$ of light is 248.30 nm is exemplified. Based on this assumption, the thickness condition with high efficiency obtained by executing the calculation of the efficiency in a manner similar to the first embodiment is as described below.

FIG. 6 is a graph illustrating a calculated result of the efficiency in the present embodiment, and corresponds to FIG. 2, which is the calculated result of the efficiency in the first embodiment. As seen from FIG. 6, an efficiency lowering condition shown in FIG. 2 shifts in a direction in which the thickness of the dielectric layer 4 on the counter surface 9 increases. That is, the thickness condition with high efficiency is not limited in a range narrower than a condition defined at 193.00 nm when considering, for example, the wavelength $\lambda$ in a range between 193 nm and 300 nm. Accordingly, satisfying the formula (2) defined at 193.00 nm, which is a minimum wavelength considered above, allows realizing the diffraction grating having high efficiency also in the wavelength $\lambda$ in a range of 193.00 nm or above, in a manner similar to each of the embodiments.

While the present invention has been described with reference to embodiments, it is to be understood that the invention is not limited to the disclosed embodiments.

**Claims**

1. A reflection-type diffraction grating (1) that has a grating, the cross section of which is an asymmetrical triangular shape, the diffraction grating (1) comprising:

    a first layer (3) formed on the cross section having the asymmetrical triangular shape, of which a material is a metal, for reflecting light (5); and
    a second layer (4) formed on the first layer (3) in a surface of a long side (9) of the triangular shape, of which a material is a dielectric, wherein given that a refractive index of the dielectric of the second layer (4) is "n", the thickness of the second layer (4) is 15.38 x (n - 1)$^{-0.65}$(nm) or below.

2. The diffraction grating (1) according to claim 1, wherein in a case that the second layer (4) has plural layers including a layer of which a material is a first dielectric, and a layer of which a material is a second dielectric that differs from the first dielectric, the refractive index "n" is a refractive index of the dielectric having highest refractive index among the dielectrics, and a thickness of the second layer (4) is a total thickness of the plural layers.

3. The diffraction grating (1) according to claim 1 or claim 2, wherein the second layer (4) is a single layer of $MgF_2$, or plural layers including $MgF_2$, $LaF_3$, or $AlF_3$.

4. The diffraction grating (1) according to any of claims 1 to 3, wherein a wavelength of the light (5) is in a range between 193 nm and 300 nm.

5. A laser apparatus (105), the apparatus comprising:

    the reflection-type diffraction grating (1) as claimed in any of claims 1 to 4, and
    an output mirror (103).

6. A method for manufacturing a reflection-type diffraction grating (1) that has a grating, the cross section of which is an asymmetrical triangular shape, the method comprising steps of:

    designing a thickness of a second layer (4) by using a the following condition formula such that a thickness "a" (nm) of the second layer (4) of a dielectric formed on first layer (3) configured to reflect light (5), on a surface of a long side (9) of the triangular shape satisfies the following condition formula, given that a refractive index of the dielectric of the second layer (4) is "n"

$$0 < a \leq 15.38 \times (n-1)^{-0.65}$$

    forming the first layer (3) on the cross section having the asymmetrical triangular shape; and forming the second layer (4) having the designed thickness on the first layer (3) on the surface of the long side (9) of the triangular shape.

FIG. 1A

FIG. 1B

FIG. 2

THICKNESS OF MgF$_2$ LAYER ON BLAZE SURFACE (nm)

THICKNESS OF MgF$_2$ LAYER ON COUNTER SURFACE (nm)

## FIG. 3

## FIG. 4

## FIG. 5

THICKNESS OF MgF2 LAYER (nm)

## FIG. 6

THICKNESS OF MgF2 LAYER
ON COUNTER SURFACE (nm)

FIG. 7

Europäisches
Patentamt

European
Patent Office

Office européen
des brevets

## EUROPEAN SEARCH REPORT

Application Number

EP 15 00 0640

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/001672 A1 (PAN XIAOJIANG J [US] ET AL) 3 January 2002 (2002-01-03) * figures 3,11,12 * ----- | 1-6 | INV. G02B5/18 |
| A | JP 2014 035374 A (SHIMADZU CORP) 24 February 2014 (2014-02-24) * the whole document * ----- | 1-6 | |

| | |
|---|---|
| | TECHNICAL FIELDS SEARCHED (IPC) |
| | G02B |

The present search report has been drawn up for all claims

| Place of search | Date of completion of the search | Examiner |
|---|---|---|
| The Hague | 7 May 2015 | Michel, Alain |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

       .............................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 15 00 0640

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2015

| Patent document cited in search report | | Publication date | Patent family member(s) | | Publication date |
|---|---|---|---|---|---|
| US 2002001672 | A1 | 03-01-2002 | AU | 3952502 A | 18-06-2002 |
| | | | DE | 60132355 T2 | 08-05-2008 |
| | | | EP | 1340106 A2 | 03-09-2003 |
| | | | JP | 4549019 B2 | 22-09-2010 |
| | | | JP | 2004514794 A | 20-05-2004 |
| | | | TW | 548336 B | 21-08-2003 |
| | | | US | 2002001672 A1 | 03-01-2002 |
| | | | WO | 0245475 A2 | 13-06-2002 |
| JP 2014035374 | A | 24-02-2014 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4549019 B

- US 20090027776 A